# EUROPEAN PATENT SPECIFICATION

(11) **EP 2 924 618 B1**
(45) Date of publication and mention of the grant of the patent: **15.01.2020**
(21) Application number: 14161887.6
(22) Date of filing: 27.03.2014
(51) Int. Cl.: G06K 19/077

(54) **Ultra slim card incorporating a USB device**
Ultradünne Karte mit einer USB-Vorrichtung
Carte ultrafine incorporant un dispositif USB

(43) Date of publication of application: 30.09.2015
(73) Proprietor: Intermed Asia Ltd., Kowloon (HK)
(72) Inventor: Andre, Olivier, Hung Hom, Kowloon (HK)
(74) Representative: V.O.

(56) References cited:
- US-A1- 2002 145 049
- US-A1- 2003 024 995
- US-A1- 2004 234 816
- US-A1- 2005 247 795
- US-A1- 2006 011 731
- US-A1- 2007 243 769
- US-A1- 2007 252 010
- US-A1- 2009 267 298
- US-A1- 2011 272 308
- US-B1- 6 193 163
- US-B1- 6 644 552
- US-B1- 6 883 718

## Description

### TECHNICAL FIELD

This patent application relates to the wallet-sized plastic card like a credit card or membership card that incorporates a USB (Universal Serial Bus) device and/or magnetic strip and/or a smart chip and/or NFC (Near field communication) device.

### BACKGROUND

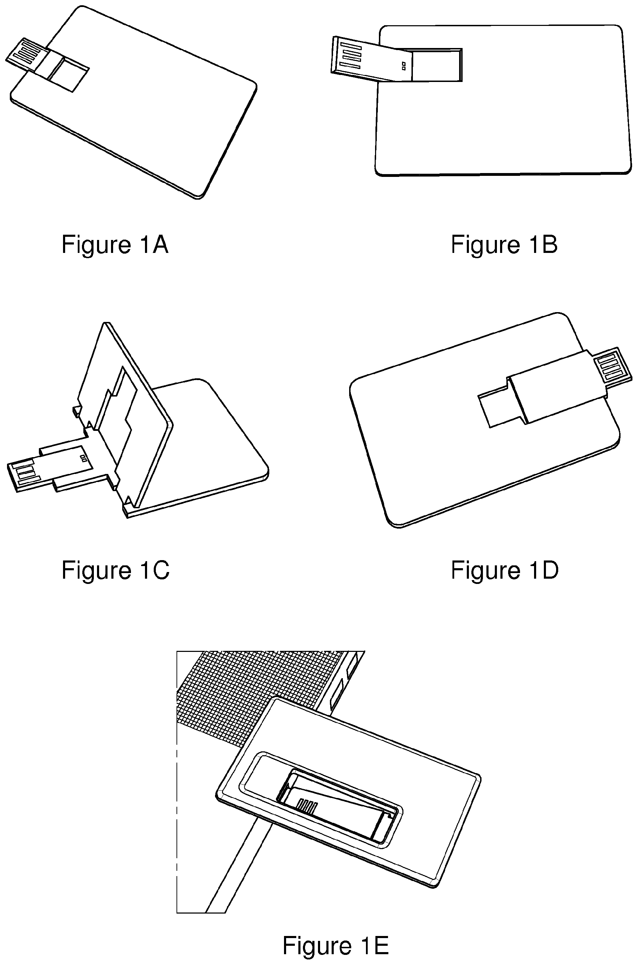

A USB card is already commercially available, and it consists of a card body which is a plastic body and a USD device connected with the card body. Figures 1A-1E depict several samples of the existing USB cards. A common feature of these USB cards is that the card body has a cut-out portion accommodating a USB device. The USB device can be securely attached to the card body or it can be pivotally/slidably connected to the card body, depending on the aesthetic and design requirements. Figure 1E also shows a USB card connecting to a USB port of a computer.

The prevailing manufacturing technology of the existing USB card is injection molding of ABS to form the card body. Patterns and labels are direct printed or adhered onto the plastic surface of the card body. Patterns and information cannot be printed on the ABS surface of the body by offset printing; labels bonded to the surface are subject to peeling up.

Due to an overall thickness of at least 2.5mm, the ABS USB card cannot be embossed. Also magnetic strips or smart chips cannot be embedded into the body, due to the potential overall thickness makes the card non-operates with a regular card reader.

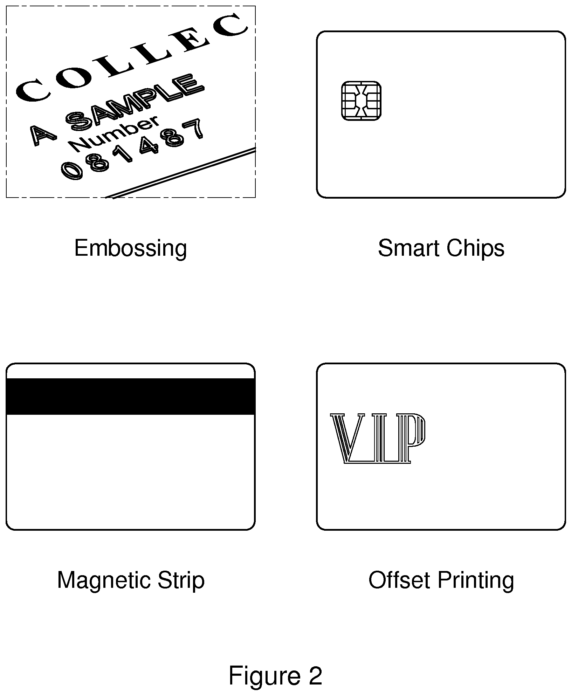

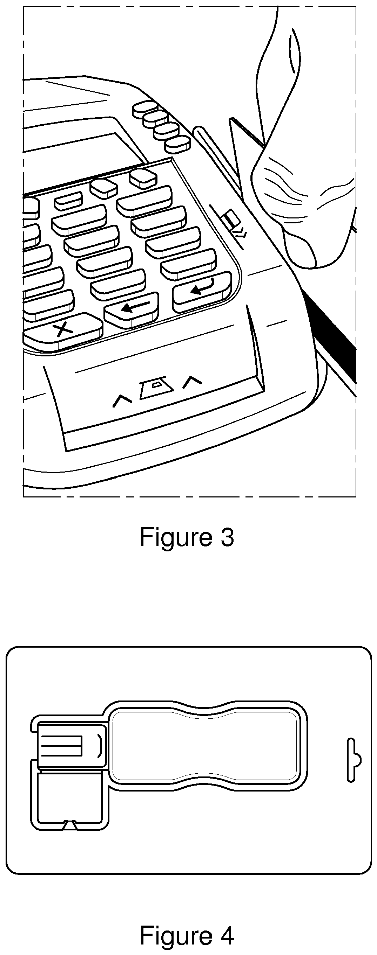

PVC cards are also well known to be normally used as credit cards or membership cards. A PVC card can be applied to more manufacturing technologies, such as embossing, offset printing. A PVC card may also embed a smart chip and/or magnetic strip and/or NFC chip. See figure 2. Even embedded with a smart chip, a magnetic strip and an NFC chip, a PVC card can still swipe across a card reader, see figure 3. A web key is a recently-developed tiny electronic device that can be connected to any reader equipped with USB or mini USB port, such as computers, mobile phones, smart phones, tablets, etc.. Once such a connection is established, an internet browser will pop-up, and a predetermined web page will be shown in the display. As a web key contains no memory therein, it usually has a small size, compared with other storage devices, like USB memory devices. Detailed descriptions of a web key incorporated slim card can be found in the Hong Kong short-term patent Publication No. 1146194A.

US20070252010 discloses many embodiments of credit card sized USB flash drives. The embodiment of figure 24 includes the features of the pre-characterizing portion of claim 1. The length and the width of the card body resemble the length and the width of a credit card. The body seems to be formed from The thickness of the card body of the embodiment of figure 24 is non-uniform and includes a thin portion and a thicker portion. The card body of the known USB flash drive is not a laminate including a top layer, a bottom layer and a middle layer.

Further smart cards are known from US 6,883,718 and US 6,193,163.

### SUMMARY

The invention provides a card in accordance with claim 1.

In a preferred embodiment, the card body is formed of three PVC layers, and the USB device is made by chip-on-board (COB) or surface mounted technology (SMT) and with a maximal thickness of 2.3mm. The USB device may be implemented as a web key.

The USB device is form as a frame carrying an electronic chip, and the frame has a cavity which accommodates the electronic chip. Furthermore, at least one of the layers is provided with a cut-out portion. A groove may be provided along an edge of the cut-out portion so that the USB device can freely slide in the groove. One of the PVC layers may have a hollow area fitting a NFC chip.

The groove may be configured with a plurality of recesses along its length. A projection may laterally extend from a side of the USB device that contacts the groove, wherein the engaging of the projection with one recess defines a sliding position of the USB device.

Preferably, the groove is configured with one recess along its length, and the sides of the USB device which contact with the groove are configured with a plurality of projections, wherein the engaging of the recess with one projection defines a sliding position of the USB device.

In another embodiment, one layer having at least the same thickness of the USB device has a cut-out portion from an edge thereof, the USB device is slidable within the cut-out portion along the opposite sides thereof, wherein a stop formed as a projection from the side of the cut-out portion is provided at at least one side of the cut-out portion so as to define the most extent that the USB device can slide out.

The frame is less than l.1mm in thickness and the USB device has a maximal thickness of 2.3mm. Once the USB device is assembled into the card, it cannot be removed from the card body.

The frame is further configured to have a folding piece defined by a folding line with reduced thickness, the folding piece can be folded along the folding line and abut against the frame, and the cavity is disposed in the folding piece.

Alternatively, the card further comprises a connecting member adhered to the frame, wherein the connecting member connected to a folding piece by a folding line, and the cavity is disposed in the folding piece.

In another preferred embodiment, the card is a credit card or a membership card. A magnetic tape storing data is embedded into the card body or is adhered onto a surface of the card body, and/or a microchip storing data is embedded into the card body, and/or a chip that communicates with an external device wirelessly (e.g. an NFC chip) is built into the card body. The surface of the card body can be decorated by offset printing or embossing.

### ILLUSTRATIONS OF DRAWINGS

Figures 1A-IE show samples of the existing USB card, in particular a USB card connecting with a USB port of a personal computer;
Figure 2 shows the existing PVC card, for instance a credit card or a membership card;
Figure 3 shows the existing PVC card with a magnetic strip swiping across a reader;
Figure 4 shows a state-of-art PVC card with a USB storage device;
Figure 5 shows a card incorporating a web key in accordance with an embodiment of the invention;
Figure 6 is an exploded view showing a card in accordance with an embodiment of the invention;
Figure 7 shows another embodiment of the card in accordance with the invention; and
Figure 8 shows an example of an card of the invention configured as a credit card or a membership card.

### DESCRIPTIONS OF EMBODIMENTS

Referring to figure 4 which demonstrates an existing PVC card with a USB storage, the card body is cut out to accommodate a smart chip. This card (commercialized by www.plug-up.com) is similar to a USB storage that can be directly connected to the internet using the USB port without a card reader or any hardware drive software. The USB storage may be embodied as a web key. The USB storage and its cover are attached to the card body by breakable joints along its edges. Users have to break the joints to get out the USB storage and insert the same into a USB port afterwards. The disadvantages are that once the USB storage is removed from the card body, it can not link to the body again.

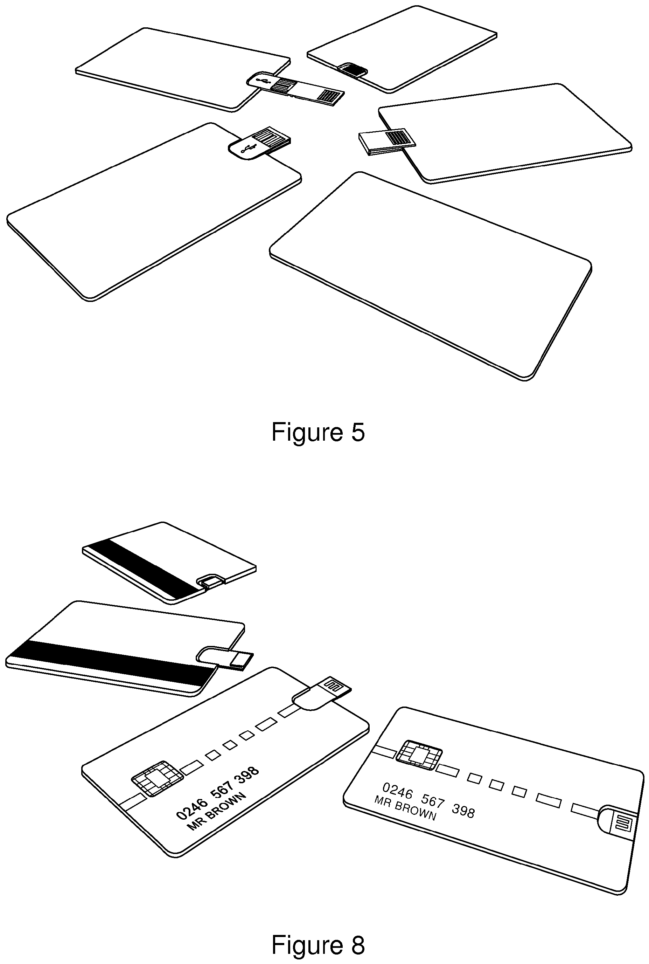

Figure 5 depicts samples of the card of the present invention. The ultra slim card comprises a card body formed of multiple PVC layers formed by lamination, and an attachment by which a USB device can slide in and out of the card body. Figure 5 illustrates the USB device is completely received in the card body and is slid out of the card body.

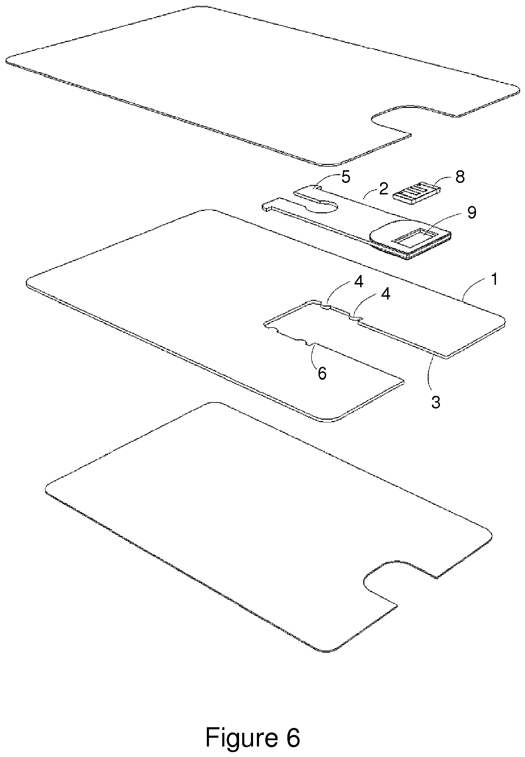

Figure 6 shows more details of the ultra slim card incorporating a USB device. In this embodiment, a sandwich type card consisting of three layers are explained. Other numbers of layers are also within the scope of this invention. Each layer is made of PVC and forms the card body by lamination. A middle layer 1 accommodating a USB device 2 has a cut-out portion, and the cut-out portion is provided with a groove 3 along both of its edges, so that the USB device 2 can freely slide within the groove 3.

To restrict the extent of the sliding of the USB device 2, the groove 3 is configured with two recesses 4 along its length. The recesses 4 can engage with a projection 5 at an end of the USB device 2 which extends laterally from its side. The projection 5 contacts with the groove 3. Once the projection 5 engages with a recess 4, the USB device 2 can be secured in that position. Each recess 4 defines a sliding position of the USB device 2. Although the embodiment of figure 6 shows recesses 4 are fanned on both sides of the groove 3 and both sides of the USD device 2 have a projections 5, disposing the recesses and projection on one side only is also possible. If only one sliding position which defines the most extent that the USB device can slide out is preferred, the groove 3 can be configured with only one recess or one pair of recesses on both sides of the groove 3.

The USB device 2 is formed as a frame 7 carrying an electronic chip 8 in a cavity 9 thereof. The projection 5 extends laterally from the sides of the frame 7. Due to the larger thickness of the electronic chip 8 located at the connecting end of the USB device 2, the USB device 2 has a maximal thickness of 2.3 mm at the connecting end (the electronic chip 8), and the frame 7 overall is less than 1.1 mm in thickness.

The embodiment of figure 6 shows the middle layer 1 has a thickness not less than that of the frame 7. However, if a thicker frame is applied, more layers are required to form the cut-out portion so as to accommodate the USB device.

In an alternative embodiment, the middle layer 1 has a thickness at least the same as the frame 7. No groove is provided whilst the USB device 2 can still slide in the cut-out portion. However, a stop 6 is formed as a protrusion from one or both sides of the cut-out portion. Once the projection 5 of the USB device 2 contacts the stop 6, the USB device 2 cannot slide outward any further.

The USB device can be made by chip-on-board (COB) or surface mounted technology (SMT) and with a maximal thickness of 1.2mm. A known method to prepare a USB data storage with such a small thickness is taught in US 2011 0 292 586 which discloses a storage device of a package of COB.

Except the connecting end of the USB device 2, the ultra slim card is less than 1.1mm in thickness. Such a slim dimension allows to be swiped across a POS machine. Contrary to that, the existing ABS USB card cannot swipe across a POS machine.

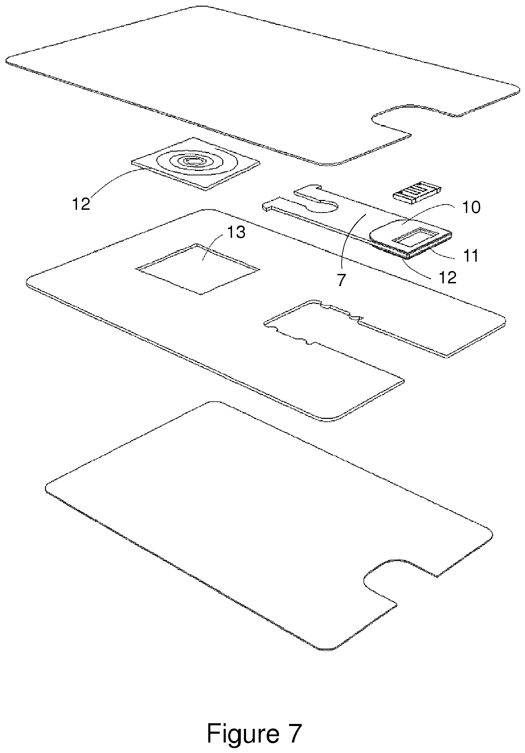

In a preferred embodiment which is similar to figure 6, one of the PVC layers making the card body has a hollow area 13 fitting a NFC (near field communication) chip 12. This permits the card to communicate with external reader wirelessly, as shown in figure 7.

Still referring to figure 7, a folding function of the frame is described. Since the frame 7 is very slim with a thickness of less than 1.1 mm and some adapting ports of external devices are larger than that dimension, the connecting end of the frame 7 can be folded up by the hinge. The connecting end of the frame 7 may have a folding line 11 with a reduced thickness as so to act as a hinge, and a folding piece 10 may be folded along the folding line 11 and abut against the frame 7. In this embodiment, the electronic chip is carried by a cavity in the folding piece 10.

In another embodiment, the frame 7 is configured as that in figure 6, but the folding piece 10 is connected to a connecting member 12 by the folding line 11. The connecting member 12 is attached to the frame 7 by adhesives.

As illustrated in figure 8, the ultra slim card is configured as a credit card or membership card. A magnetic tape is embedded into the card body or adhered onto the surface of the body. This card has an embedded microchip. Preferably, the card may have a chip therein to communicate with an external device wirelessly (e.g. an NFC chip). All of the magnetic tape, microchip and wireless chip can store data. Once the card is inserted into a reader, users can access to the data and change the same if necessary.

Still referring to figure 8, the card is embossed to present personal information, say cardholder's name and account numbers. ABS cards cannot be processed by embossing. Surfaces of the card body can be decorated with card issuing company's logo by offset printing.

As obvious from the above disclosure the ultra slim card is advantageous compared with the existing ABS USB card and the PVC card with USB function. Specifically, the ultra slim card can be made with less that 1.1mm thickness at a high quality of surface printing. The ultra slim card can also incorporate a magnetic strip and/or smart chips; the card body can be embossed for personalization.

## Claims

1. A card comprising:
• a card body; and
• a USB device (2) for storing data;, and
• an attachment by which the USB device (2) can slide in and out of the card body,
**characterized in that**
• the card body is a laminate of multiple PVC layers (1) and has a thickness of less than 1,1 mm
• the USB device (2) includes:
∘ a frame (7) that has a cavity (9) and that has a thickness of less than 1.1 mm; and
∘ an electronic chip (8) configured to store the data and being accommodated in the cavity (9) of the frame (7)
wherein a middle layer of the multiple PVC layers is provided with a cut-out portion in which the frame (7) that accommodates the electronic chip (8) is slideably arranged between a top and a bottom layer of the PVC-laminate.

2. The card in accordance with claim 1, wherein the card body is formed of three PVC layers.

3. The card in accordance with claim 2, wherein the USB device (2) is made by chip-on-board technology.

4. The card in accordance with claim 2, wherein the electronic chip (8) of the USB device (2) is made by surface mounted technology and has a maximal thickness of 2.3mm.

5. The card in accordance with claim 1, wherein a groove (3) is provided along an edge of the cut-out portion so that the USB device (2) can freely slide in the groove.

6. The card in accordance with claim 5, wherein the groove (3) is configured with a plurality of recesses (4) along its length, wherein a projection (5) extends laterally from a side of the USB device (2) and contacts with the groove (3), wherein the engaging of the projection (5) with one recess (4) defines a sliding position of the USB device (2) in which the USB device (2) is secured.

7. The card in accordance with claim 5, wherein the groove (3) is configured with one recess (4) along its length, wherein the sides of the USB device (2) which contact with the groove (3) are provided with a plurality of projections (5), wherein the engaging of the recess (4) with one projection (5) defines a sliding position of the USB device in which the USB device (2) is secured.

8. The card in accordance with claim 1, wherein the cut-out portion includes a stop (6) that is formed as a protrusion at at least one side of the cut-out portion, wherein the USB device includes a projection (5) that extends laterally from a side of the USB device (2) and is configured to cooperate with the stop (6) so as to define the most extent that the USB device can slide out.

9. The card in accordance with claim 1, wherein one of the PVC layers has a hollow area fitting a NFC chip.

10. The card in accordance with claim 8, wherein the frame (7) is configured as having a folding piece (10) defined by a folding line (11) with reduced thickness, the folding piece (10) can be folded along the folding line (111) and abut against the frame (7), and the cavity (9) is disposed in the folding piece.

11. The card in accordance with claim 8, comprising a connecting member (12) adhered to the frame (7), wherein the connecting member (12) is connected to a folding piece by a folding line (11), and the cavity (9) is disposed in the folding piece.

12. The card in accordance with claim 1, wherein the card is a credit card or a membership card.

13. The card in accordance with claim 1, wherein a magnetic tape storing data is embedded into the card body or is adhered onto a surface of the card body, and/or a microchip storing data is embedded into the card body, and/or a NFC chip that communicates with an external device wirelessly is built into the card body.

14. The card in accordance with any one of the proceeding claims, wherein a surface of the card body is decorated by offset printing or embossing.

## Patentansprüche

1. Eine Karte, umfassend:
• einen Kartenkörper; und
• ein USB-Gerät (2) zum Speichern von Daten; und
• einen Aufsatz, mit dem das USB-Gerät (2) in den Kartenkörper hinein- und herausgleiten kann,
**dadurch gekennzeichnet, dass**
• der Kartenkörper ein Laminat aus mehreren PVC-Schichten (1) ist und eine Dicke von weniger als 1,1 mm hat
• wobei das USB-Gerät (2) Folgendes umfasst:
∘ einen Rahmen (7) mit einem Hohlraum (9) und einer Dicke von weniger als 1,1 mm; und
∘ einen elektronischen Chip (8), der zum Speichern der Daten konfiguriert ist und in dem Hohlraum (9) des Rahmens (7) untergebracht ist
wobei eine mittlere Schicht der mehreren PVC-Schichten mit einem Ausschnittsteil versehen ist, in dem der Rahmen (7), der den elektronischen Chip (8) unterbringt, verschiebbar zwischen einer oberen und einer unteren Schicht des PVC-Laminats angeordnet ist.

2. Karte nach Anspruch 1, wobei der Kartenkörper aus drei PVC-Schichten gebildet ist.

3. Karte nach Anspruch 2, wobei das USB-Gerät (2) durch Chip-on-Board-Technologie hergestellt wird.

4. Karte nach Anspruch 2, wobei der elektronische Chip (8) des USB-Geräts (2) durch Oberflächenmontagetechnologie hergestellt ist und eine maximale Dicke von 2,3 mm aufweist.

5. Karte nach Anspruch 1, wobei eine Nut (3) entlang einer Kante des Ausschnittsteils vorgesehen ist, so dass das USB-Gerät (2) frei in der Nut gleiten kann.

6. Karte nach Anspruch 5, wobei die Nut (3) entlang ihrer Länge mit mehreren Aussparungen (4) konfiguriert ist, wobei sich ein Vorsprung (5) seitlich von einer Seite des USB-Geräts (2) erstreckt und mit der Nut (3) in Kontakt steht, wobei das Eingreifen des Vorsprungs (5) in eine Aussparung (4) eine Gleitposition des USB-Geräts (2) definiert, in der das USB-Gerät (2) gesichert ist.

7. Karte nach Anspruch 5, wobei die Nut (3) entlang ihrer Länge mit einer Aussparung (4) konfiguriert ist, wobei die Seiten des USB-Geräts (2), die mit der Nut (3) in Kontakt stehen, mit mehreren Vorsprüngen (5) versehen sind, wobei das Eingreifen der Aussparung (4) mit einem Vorsprung (5) eine Gleitposition des USB-Geräts definiert, in der das USB-Gerät (2) gesichert ist.

8. Karte nach Anspruch 1, wobei der Ausschnittsteil einen Anschlag (6) enthält, der an wenigstens einer Seite des Ausschnittsteils als Vorsprung ausgebildet ist, wobei das USB-Gerät einen Vorsprung (5) enthält, der sich seitlich von einer Seite des USB-Geräts (2) erstreckt und so konfiguriert ist, dass er mit dem Anschlag (6) zusammenwirkt, um das maximale Maß zu definieren, über welches das USB-Gerät herausgleiten kann.

9. Karte nach Anspruch 1, wobei eine der PVC-Schichten einen hohlen Bereich aufweist, der zu einem NFC-Chip passt.

10. Karte nach Anspruch 8, wobei der Rahmen (7) so konfiguriert ist, dass er ein Faltstück (10) aufweist, das durch eine Faltlinie (11) mit reduzierter Dicke definiert ist, wobei das Faltstück (10) entlang der Faltlinie (111) gefaltet werden und am Rahmen (7) anliegen kann, und der Hohlraum (9) in dem Faltstück angeordnet ist.

11. Karte nach Anspruch 8, umfassend ein an den Rahmen (7) geklebtes Verbindungselement (12), wobei das Verbindungselement (12) durch eine Faltlinie (11) mit einem Faltstück verbunden ist, und der Hohlraum (9) im Faltstück angeordnet ist.

12. Karte nach Anspruch 1, wobei die Karte eine Kreditkarte oder eine Mitgliedskarte ist.

13. Karte nach Anspruch 1, wobei ein Magnetband, das Daten speichert, in den Kartenkörper eingebettet ist oder auf eine Oberfläche des Kartenkörpers geklebt ist, und/oder ein Mikrochip, der Daten speichert, in den Kartenkörper eingebettet ist, und/oder ein NFC-Chip, der drahtlos mit einem externen Gerät kommuniziert, im Kartenkörper integriert ist.

14. Karte nach einem der vorhergehenden Ansprüche, wobei eine Oberfläche des Kartenkörpers durch Offsetdruck oder Prägen dekoriert ist.

## Revendications

1. Carte comprenant :
• un corps de carte ; et
• un dispositif à bus série universel, USB (2) pour stocker des données ; et
• une fixation par laquelle le dispositif USB (2) peut coulisser dans le corps de carte et hors de celui-ci,
**caractérisée en ce que**
• le corps de carte est un stratifié de multiples couches de polychlorure de vinyle, PVC (1) et possède une épaisseur de moins de 1,1 mm
• le dispositif USB (2) inclut :
o un cadre (7) qui possède une cavité (9) et qui possède une épaisseur de moins de 1,1 mm ; et
o une puce électronique (8) configurée pour stocker les données et étant reçue dans la cavité (9) du cadre (7)
dans laquelle une couche médiane des multiples couches de PVC est munie d'une partie découpée dans laquelle le cadre (7) qui reçoit la puce électronique (8) est agencée de manière coulissante entre une couche supérieure et une couche inférieure du stratifié de PVC.

2. Carte selon la revendication 1, dans laquelle le corps de carte est formé de trois couches de PVC.

3. Carte selon la revendication 2, dans laquelle le dispositif USB (2) est fabriqué par une technologie de puce sur plaque.

4. Carte selon la revendication 2, dans laquelle la puce électronique (8) du dispositif USB (2) est fabriquée par une technologie de montage en surface et possède une épaisseur maximale de 2,3 mm.

5. Carte selon la revendication 1, dans laquelle une rainure (3) est ménagée le long d'un bord de la partie découpée de sorte que le dispositif USB (2) peut coulisser librement dans la rainure.

6. Carte selon la revendication 5, dans laquelle la rainure (3) est configurée avec une pluralité d'évidements (4) le long de sa longueur, dans laquelle une protubérance (5) s'étend latéralement à partir d'un côté du dispositif USB (2) et est en contact avec la rainure (3), dans laquelle la mise en prise de la protubérance (5) avec un évidement (4) définit une position de coulissement du dispositif USB (2) dans laquelle le dispositif USB (2) est immobilisé.

7. Carte selon la revendication 5, dans laquelle la rainure (3) est configurée avec un évidement (4) le long de sa longueur, dans laquelle les côtés du dispositif USB (2) qui sont en contact avec la rainure (3) sont munis d'une pluralité de protubérances (5), dans laquelle la mise en prise de l'évidement (4) avec une protubérance (5) définit une position de coulissement du dispositif USB dans laquelle le dispositif USB (2) est immobilisé.

8. Carte selon la revendication 1, dans laquelle la partie découpée inclut une butée (6) qui est sous la forme d'une saillie sur au moins un côté de la partie découpée, dans laquelle le dispositif USB inclut une protubérance (5) qui s'étend latéralement à partir d'un côté du dispositif USB (2) et est configurée pour coopérer avec la butée (6) afin de définir l'étendue la plus avancée dans laquelle le dispositif USB peut coulisser vers l'extérieur.

9. Carte selon la revendication 1, dans laquelle l'une des couches de PVC possède une zone creuse s'adaptant à une puce de communication en champ proche, NFC.

10. Carte selon la revendication 8, dans laquelle le cadre (7) est configuré comme ayant une pièce de pliage (10) définie par une ligne de pliage (11) d'épaisseur réduite, la pièce de pliage (10) peut être pliée le long de la ligne de pliage (111) et venir en butée contre le cadre (7), et la cavité (9) est disposée dans la pièce de pliage.

11. Carte selon la revendication 8, comprenant un élément de liaison (12) collé au cadre (7), dans laquelle l'élément de liaison (12) est relié à une pièce de pliage par une ligne de pliage (11), et la cavité (9) est disposée dans la pièce de pliage.

12. Carte selon la revendication 1, dans laquelle la carte est une carte de crédit ou une carte de membre.

13. Carte selon la revendication 1, dans laquelle une bande magnétique stockant des données est incorporée dans le corps de carte ou est collée sur une surface du corps de carte, et/ou une micropuce stockant des données est incorporée dans le corps de carte, et/ou une puce NFC qui communique avec un dispositif externe de manière sans fil est intégrée dans le corps de carte.

14. Carte selon l'une quelconque des revendications précédentes, dans laquelle une surface du corps de carte est décorée par impression offset ou gaufrage.
